# EUROPÄISCHE PATENTSCHRIFT

(11) **EP 2 101 201 B1**
(45) Veröffentlichungstag und Bekanntmachung des Hinweises auf die Patenterteilung: **12.10.2011**
(21) Anmeldenummer: 09001359.0
(22) Anmeldetag: 31.01.2009
(51) Int. Cl.: G02B 3/00, G02B 27/09, H01S 3/00

(54) **Vorrichtung zur Aufteilung eines Lichtstrahls**
Device for dividing a light beam
Dispositif pour diviser un faisceau

(30) Priorität: 21.02.2008 DE 102008010382
(43) Veröffentlichungstag der Anmeldung: 16.09.2009
(73) Patentinhaber: LIMO Patentverwaltung GmbH & Co. KG, 36419 Gerstengrund (DE)
(72) Erfinder: Mitra, Thomas, Dr., 44309 Dortmund (DE); Fründt, Jana, 51381 Leverkusen (DE)
(74) Vertreter: Basfeld, Rainer

(56) Entgegenhaltungen:
- WO-A-2005/103795
- US-A1- 2007 070 476
- US-A1- 2007 127 245
- US-A1- 2008 013 183

## Beschreibung

Die vorliegende Erfindung betrifft eine Vorrichtung zur Aufteilung eines Lichtstrahls gemäß dem Oberbegriff des Anspruchs 1.

Definitionen: In Ausbreitungsrichtung des Lichtstrahls oder der Laserstrahlung meint mittlere Ausbreitungsrichtung des Lichtstrahls oder der Laserstrahlung, insbesondere wenn diese keine ebene Welle ist oder zumindest teilweise divergent oder konvergent ist. Mit Lichtstrahl, Teilstrahl oder Strahl ist, wenn nicht ausdrücklich anderes angegeben ist, kein idealisierter Strahl der geometrischen Optik gemeint, sondern ein realer Lichtstrahl, wie beispielsweise ein Laserstrahl mit einem Gauß-Profil oder einem modifizierten Gauß-Profil, der keinen infinitesimal kleinen, sondern einen ausgedehnten Strahlquerschnitt aufweist.

Die Teilung eines Lichtstrahls, wie beispielsweise eines Laserstrahls eines Hochenergielasers, in eine Mehrzahl von Teilstrahlen geschieht im Stand der Technik häufig durch Polarisationsstrahlteiler. Diese weisen insbesondere den Nachteil auf, dass sie nur sinnvoll bei einem einfallenden Lichtstrahl mit definierter Polarisation verwendet werden können. Falls ein nicht polarisierter Laserstrahl in mehrere Teilstrahlen gleicher Intensität geteilt werden soll, muss dieser vor dem Aufteilen durch Polarisätionsfilter polarisiert werden, was beträchtliche Leistungsverluste verursacht.

Aus der US 2007/0127245 A1 ist eine Vorrichtung der eingangs genannten Art bekannt. Die darin beschriebene Vorrichtung umfasst eine Lichtquelle, deren Licht in ein Linsenarray eintreten kann. Die Linsenelemente des Linsearrays können unterschiedliche Brennweiten aufweisen. In Ausbreitungsrichtung des Lichts hinter dem Linsearray ist ein optisches Bauteil angeordnet, in das die aus den einzelnen Linsenelementen des Linsenarray austretenden Teilstrahlen des Lichts eintreten können. Das optische Bauteil ist im einfachsten Fall ein Stab aus einem transparenten Material, in dem das Licht durch innere Reflexionen homogenisiert werden kann. Dabei werden Anteile des durch einzelne Linsenelemente des Linsenarrays hindurch getretenen Lichts in den Stab zurück reflektiert und damit umgelenkt. Es besteht auch die Möglichkeit, dass der Stab nicht ausschließlich langgestreckt, sondern gefaltet ist.

Aus der WO 2005/103795 ist eine Vorrichtung zur Homogenisierung von Licht bekannt. Die Vorrichtung umfasst ein Array, bei dem eine Vielzahl von Linsenelementen nebeneinander angeordnet sind. Die Linsenelemente weisen dabei jeweils in einem mittleren Bereich eine asphärische Krümmung zweiten Grades und in den Randbereichen eine davon abweichende Krümmung auf, die insbesondere von höheren Ordnungen eines Polynoms dominiert wird. Anstelle der Linsenelemente können auch vergleichbar geformte Spiegelelemente verwendet werden.

Die Aufteilung eines Lichtstrahls durch eine Mehrzahl geometrischer Strahlteiler wie Spiegel kann unerwünschte Beugungserscheinungen verursachen.

Das der vorliegenden Erfindung zugrunde liegende Problem ist die Schaffung einer Vorrichtung der eingangs genannten Art, die effektiver gestaltet ist und insbesondere auch zur Aufteilung eines unpolarisierten Lichtstrahls verwendet werden kann.

Dies wird erfindungsgemäß durch eine Vorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass ein erstes Umlenkelement einer ersten Linse mit einer ersten Brennweite derart zugeordnet ist, dass es einen durch die erste Linse hindurchgetretenen Teilstrahl umlenken kann, und dass ein zweites Umlenkelement einer zweiten Linse mit einer zweiten Brennweite derart zugeordnet ist, dass es einen durch die zweite Linse hindurchgetretenen Teilstrahl umlenken kann, wobei das erste Umlenkelement in einer dritten, zu der ersten und zu der zweiten Richtung senkrechten Richtung der Ebene, in der die Verbindungslinien der Linsen des ersten Linsenarrays liegen, einen kleineren Abstand aufweist als das zweite Umlenkelement, und wobei die zweite Brennweite größer ist als die erste Brennweite.

Die erfindungsgemäße Gestaltung des Linsenarrays ermöglicht die Anordnung der Umlenkelemente in unterschiedlichen Entfernungen zum Linsenarray, so dass einerseits die Umlenkelemente einander nicht stören und andererseits die von diesen abgelenkten Teilstrahlen getrennt voneinander verlaufen. Die unterschiedlichen Brennweiten der Linsen bewirken eine unterschiedlich starke Konvergenz der Teilstrahlen. Aufgrund der unterschiedlich starken Konvergenz der Teilstrahlen sind trotz Versetzung der Umlenkelemente in Ausbreitungsrichtung der Teilstrahlen zueinander die Querschnitte der Teilstrahlen bei dem Auftreffen auf die Umlenkelemente klein genug, um jeweils eine Umlenkung des vollständigen Teilstrahls zu gewährleisten.

Beispielsweise können die Umlenkelemente Spiegel sein.

Weiterhin können die Linsen Zylinderlinsen sein.

Dabei besteht die Möglichkeit, dass die Vorrichtung ein zweites Linsenarray umfasst, wobei sowohl das erste, als auch das zweite Linsenarray jeweils eine Mehrzahl von Zylinderlinsen aufweisen, und wobei die Zylinderachsen der Zylinderlinsen auf dem ersten Linsenarray senkrecht zu denen auf dem zweiten Linsenarray ausgerichtet sind.

Weiterhin besteht die Möglichkeit, dass die Aperturen mindestens einiger der Linsen des ersten und/oder des zweiten Linsenarrays gleich sind.

Zusätzlich kann vorgesehen sein, dass die beiden äußeren Linsen des ersten Linsenarrays eine größere Apertur aufweisen als zumindest einige andere der Linsen des ersten Linsenarrays oder dass die beiden äußeren Linsen des zweiten Linsenarrays eine größere Apertur aufweisen als zumindest einige andere der Linsen des zweiten Linsenarrays. Durch eine derartige Gestaltung kann gewährleistet werden, dass die Intensitäten sämtlicher Teilstrahlen gleich groß sind.

Alternativ dazu besteht die Möglichkeit, die Aperturen der einzelnen Linsen derart unterschiedlich groß zu wählen, dass einzelne oder sämtliche der Teilstrahlen eine zueinander unterschiedliche Intensität aufweisen. Je nach Anforderung kann somit durch die Gestaltung des Linsenarrays das Verhältnis der Intensitäten der Teilstrahlen vorgegeben werden.

Es kann vorgesehen sein, dass die Vorrichtung mindestens eine als Fourierlinse dienende Linse umfasst, die in Ausbreitungsrichtung des aufzuteilenden Lichtstrahls hinter einem der Umlenkelemente angeordnet ist, wobei durch diese Linse ein von dem Umlenkelement abgelenkter Teilstrahl hindurch treten und hinsichtlich seiner Strahlparameter beeinflusst werden kann. Diese mindestens eine Linse kann bei stark unterschiedlichen Brennweiten der Linsen des Linsenarrays eine Angleichung der Strahlparameter der Teilstrahlen bewirken, so dass diese weitgehend parallel und mit gleicher Divergenz verlaufen.

Es besteht die Möglichkeit, dass die Vorrichtung Homogenisierungsmittel umfasst, die in Ausbreitungsrichtung des aufzuteilenden Lichtstrahls vor dem ersten Linsenarray angeordnet sind. Die Homogenisierungsmittel können dazu beitragen, dass die Teilstrahlen jeweils die gleiche Intensität aufweisen. Weiterhin können die Homogenisierungsmittel die eigentliche Strahlteilung unempfindlich gegenüber Veränderungen der Strahlparameter der Laserquelle machen.

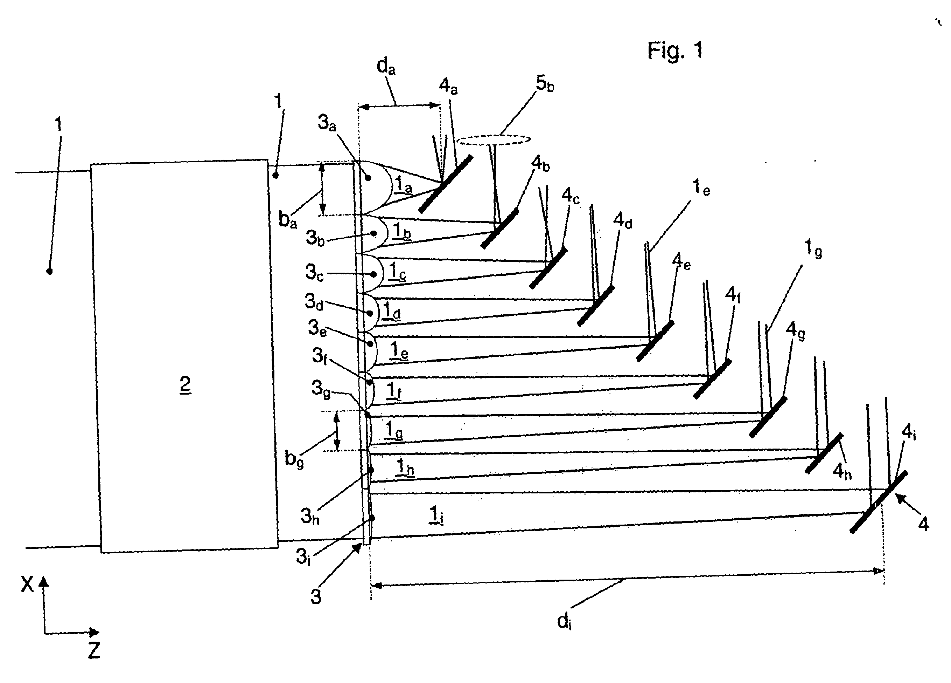

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigt
- Fig. 1: eine schematische Ansicht einer erfindungsgemäßen Vorrichtung.

Zur besseren Orientierung ist in Fig. 1 ein kartesisches Koordinatensystem eingezeichnet.

Die in Fig. 1 abgebildete erfindungsgemäße Vorrichtung soll einen sich in positiver Z-Richtung, beziehungsweise von der linken Seite in Fig. 1 einfallenden Lichtstrahl 1, der beispielsweise von einem Hochleistungslaser ausgeht und beispielsweise unpolarisiert ist, in mehrere Teilstrahlen 1ₐ bis 1ᵢ aufteilen. Dazu umfasst die Vorrichtung Homogenisierungsmittel 2, die in Fig. 1 lediglich schematisch angedeutet sind. Die Homogenisierungsmittel 2 können in üblicher Weise Linsenarrays, beispielsweise zwei in Ausbreitungsrichtung Z des Lichtstrahls hintereinander angeordnete Zylinderlinsenarrays, sowie Fourierlinsen zur Überlagerung der durch die Zylinderlinsenarrays hindurch getretenen Teilstrahlen aufweisen.

Wenn der Lichtstrahl 1 in lediglich einer Richtung, wie beispielsweise der X-Richtung in Fig. 1 in Teilstrahlen aufgespalten werden soll, reicht eine Homogenisierung des Lichtstrahls 1 hinsichtlich der X-Richtung. Wenn der Lichtstrahl 1 jedoch in zwei Richtungen, wie beispielsweise in der X-Richtung und der sich in Fig. 1 hineinerstreckenden Y-Richtung in Teilstrahlen aufgespalten werden soll, sollte die Homogenisierung des Lichtstrahls 1 sowohl hinsichtlich der X-Richtung als auch hinsichtlich der Y-Richtung vorgenommen werden. Dann müssen beispielsweise zwei zusätzliche Zylinderlinsenarrays vorgesehen werden, deren Zylinderachsen zu den Zylinderachsen der beiden bereits erwähnten Zylinderlinsenarrays senkrecht ausgerichtet sind.

Die Vorrichtung umfasst weiterhin ein Linsenarray 3, durch das der von den Homogenisierungsmitteln 2 homogenisierte Lichtstrahl 1 hindurchtritt. Das Linsenarray 3 weist eine Mehrzahl von Linsen 3ₐ bis 3ᵢ auf, die in dem abgebildeten Ausführungsbeispiel als Zylinderlinsen ausgebildet sind, deren Zylinderachsen sich in Y-Richtung erstrecken. In dem abgebildeten Ausführungsbeispiel sind neun Linsen 3ₐ bis 3ᵢ vorgesehen. Es besteht durchaus die Möglichkeit, mehr oder weniger Linsen in dem Linsenarray 3 vorzusehen, wenn mehr oder weniger Teilstrahlen erzeugt werden sollen.

Wenn der Lichtstrahl 1 in zwei Richtungen, wie beispielsweise in der X-Richtung und der sich in Fig. 1 hineinerstreckenden Y-Richtung in Teilstrahlen aufgespalten werden soll, wird ein zusätzliches, in Fig. 1 nicht abgebildetes Zylinderlinsenarray vorgesehen, dessen Zylinderachsen sich in X-Richtung erstrecken.

Der Lichtstrahl 1 wird von dem Linsenarray 3 in eine der Anzahl der Linsen 3ₐ bis 3ᵢ entsprechende Anzahl von Teilstrahlen 1ₐ bis 1ᵢ aufgeteilt. Jede der Linsen 3ₐ bis 3ᵢ des Linsenarrays 3 weist eine positive Brennweite auf, die sich von den Brennweiten der anderen Linsen 3ₐ bis 3ᵢ unterscheidet. Dies führt dazu, dass die Teilstrahlen 1ₐ bis 1ᵢ unterschiedlich stark konvergieren, wie aus Fig. 1 ersichtlich ist. Im abgebildeten Ausführungsbeispiel weist die in Fig. 1 oberste Linse 3ₐ die kürzeste Brennweite auf, wobei die Brennweiten von oben nach unten in Fig. 1 zunehmen, so dass die unterste Linse 3ᵢ die längste Brennweite aufweist.

In Y-Richtung sind sämtliche Linsen 3ₐ bis 3ᵢ gleich lang. Die Linsen 3_{b} bis 3ₕ weisen sämtlich die gleiche Breite und damit die gleiche Apertur auf, so dass auf jeden der Teilstrahlen 1_{b} bis 1ₕ ein vergleichbarer Anteil des eingangsseitigen Lichtstrahls 1 entfällt. Die Breite b_{g} der Linse 3_{g} ist exemplarisch eingezeichnet. Die Teilstrahlen 1_{b} bis 1ₕ weisen somit die gleiche Intensität auf, wenn der auf das Linsenarray 3 auftreffende Lichtstrahl 1 homogen ist. Die beiden äußeren Linsen 3ₐ und 3ᵢ weisen in X-Richtung eine etwas größere Breite auf als die übrigen Linsen 3_{b} bis 3ₕ. Die Breite bₐ der Linse 3ₐ ist exemplarisch eingezeichnet. Die etwas größere Breite bₐ beziehungsweise Apertur der Linsen 3ₐ und 3ᵢ berücksichtigt die zum Rand des Lichtstrahls 1 abfallenden Flanken des Strahlungsfeldes beziehungsweise die sich zum Rand verringernde Intensität des dem Lichtstrahl 1 zugeordneten Strahlungsfeldes. Durch diese etwas größere Breite bₐ der randseitigen Linsen 3ₐ und 3ᵢ kann gewährleistet werden, dass auch die randseitigen Teilstrahlen 1ₐ und 1ᵢ die gleiche Intensität aufweisen wie die übrigen Teilstrahlen 1_{b} bis 1ₕ.

Es besteht durchaus die Möglichkeit, die Aperturen der einzelnen Linsen 3ₐ bis 3ᵢ derart unterschiedlich groß zu wählen, dass einzelne oder sämtliche der Teilstrahlen eine zueinander unterschiedliche Intensität aufweisen. Je nach Anforderung kann somit durch die Gestaltung des Linsenarrays 3 das Verhältnis der Intensitäten der Teilstrahlen 1ₐ bis 1ᵢ vorgegeben werden.

In Ausbreitungsrichtung Z hinter dem Linsenarray 3 sind Umlenkmittel 4 vorgesehen, die eine Mehrzahl von als Umlenkelementen dienenden Spiegeln 4ₐ bis 4ᵢ umfassen. Dabei ist jeder der Linsen 3ₐ bis 3ᵢ einer der Spiegel 4ₐ bis 4ᵢ zugeordnet, so dass jeder der Spiegel 4ₐ bis 4ᵢ einen der Teilstrahlen 1ₐ bis 1ᵢ nach oben in Fig. 1 beziehungsweise aus der Z-Richtung in die positive X-Richtung reflektiert. Die Spiegel 4ₐ bis 4ᵢ weisen sämtlich einen unterschiedlichen Abstand zu dem Linsenarray 3 auf. Beispielhaft eingezeichnet sind die Abstände dₐ und dᵢ zwischen dem obersten Spiegel 4ₐ und dem Linsenarray 3 sowie zwischen dem untersten Spiegel 4ᵢ und dem Linsenarray 3. Aufgrund der unterschiedlich starken Konvergenz der Teilstrahlen 1ₐ bis 1ᵢ sind trotz Versetzung der Spiegel 4ₐ bis 4ᵢ in Z-Richtung zueinander die Querschnitte der Teilstrahlen 1ₐ bis 1ᵢ bei dem Auftreffen auf die Spiegel 4ₐ bis 4ᵢ klein genug, um jeweils eine Reflexion des vollständigen Teilstrahls 1ₐ bis 1ᵢ zu gewährleisten.

Es besteht durchaus die Möglichkeit, die Spiegel 4ₐ bis 4ᵢ derart auszurichten, dass die Teilstrahlen 1ₐ bis 1ᵢ nach der Reflexion nicht parallel zueinander verlaufen, sondern sich beispielsweise voneinander entfernen beziehungsweise auseinander laufen.

Wenn die Unterschiede der Brennweiten der Linsen 3ₐ bis 3ᵢ groß sind, kann es unter Umständen sinnvoll sein, die Strahlparameter zumindest einzelner der Teilstrahlen 1ₐ bis 1ᵢ durch zusätzliche Linsen zu beeinflussen, um die Strahlparameter der reflektierten Teilstrahlen 1ₐ bis 1ᵢ aneinander anzugleichen. In den Strahlengang des Teilstrahls 1ᵢ ist gestrichelt eine derartige optionale Linse 5_{b} eingezeichnet, die beispielsweise in einer Fourieranordnung in den Strahlengang platziert ist. Es besteht durchaus die Möglichkeit in den Strahlengängen mehrerer oder aller Teilstrahlen 1ₐ bis 1ᵢ vergleichbare Linsen anzuordnen.

An dieser Stelle soll angemerkt werden, dass die Homogenisierungsmittel 2 so gestaltet werden sollten, dass die Numerische Apertur des Lichtstrahls 1 vor dem Linsenarray 3 kleiner ist als die Numerische Apertur einer jeder der Linsen 3ₐ bis 3ᵢ.

## Patentansprüche

1. Vorrichtung zur Aufteilung eines Lichtstrahls (1), umfassend
- ein erstes Linsenarray (3) mit einer Mehrzahl von in einer ersten Richtung (X) nebeneinander angeordneten Linsen (3ₐ - 3ᵢ), von denen mindestens zwei eine voneinander verschiedene, positive Brennweite aufweisen, wobei das erste Linsenarray (3) eine Ebene aufweist, die von der ersten Richtung (X) und einer zu der ersten Richtung (X) senkrechten Richtung (Y) aufgespannt wird und in der die Verbindungslinien der Linsen (3ₐ - 3ᵢ) liegen, wobei der aufzuteilende Lichtstrahl (1) durch das erste Linsenarray (3) hindurch treten kann und nach dem Hindurchtritt durch die Mehrzahl der Linsen (3ₐ - 3ᵢ) zumindest einige voneinander getrennte, zumindest teilweise konvergente Teilstrahlen (1ₐ - 1ᵢ) bilden kann; sowie
- Umlenkmittel (4) mit einer Mehrzahl von Umlenkelementen, die hinter dem ersten Linsenarray (3) angeordnet sind und zumindest einige der Teilstrahlen (1ₐ - 1ᵢ) umlenken können,
- **dadurch gekennzeichnet, dass** ein erstes Umlenkelement einer ersten Linse (3ₐ) mit einer ersten Brennweite derart zugeordnet ist, dass es einen durch die erste Linse (3ₐ) hindurchgetretenen Teilstrahl umlenken kann, und dass ein zweites Umlenkelement einer zweiten Linse (3ᵢ) mit einer zweiten Brennweite derart zugeordnet ist, dass es einen durch die zweite Linse (3ᵢ) hindurchgetretenen Teilstrahl umlenken kann, wobei das erste Umlenkelement in einer dritten, zu der ersten und zu der zweiten Richtung (X,Y) senkrechten Richtung (Z) zu der Ebene, in der die Verbindungslinien der Linsen (3ₐ - 3ᵢ) des ersten Linsenarrays (3) liegen, einen kleineren Abstand (dₐ) aufweist als das zweite Umlenkelement, und wobei die zweite Brennweite größer ist als die erste Brennweite.

2. Vorrichtung nach Anspruch 1, worin die Umlenkelemente Spiegel (4ₐ - 4ᵢ) sind.

3. Vorrichtung nach einem der Ansprüche 1 oder 2, worin die Linsen (3ₐ - 3ᵢ) Zylinderlinsen sind.

4. Vorrichtung nach Anspruch 1, wobei die Vorrichtung ein zweites Linsenarray (3) umfasst, wobei sowohl das erste, als auch das zweite Linsenarray (3) jeweils eine Mehrzahl von Zylinderlinsen aufweisen, und wobei die Zylinderachsen der Zylinderlinsen auf dem ersten Linsenarray (3) senkrecht zu denen auf dem zweiten Linsenarray (3) ausgerichtet sind.

5. Vorrichtung nach einem der Ansprüche 1 bis 4, wobei die Aperturen mindestens einiger der Linsen (3ₐ - 3ᵢ) des ersten und/oder des zweiten Linsenarrays (3) gleich sind.

6. Vorrichtung nach einem der Ansprüche 4 bis 5, wobei die beiden äußeren Linsen (3ₐ, 3ᵢ) des ersten Linsenarrays (3) eine größere Apertur aufweisen als zumindest einige andere der Linsen (3_{b} - 3ₕ) des ersten Linsenarrays (3) oder dass die beiden äußeren Linsen (3ₐ, 3ᵢ) des zweiten Linsenarrays (3) eine größere Apertur aufweisen als zumindest einige andere der Linsen (3_{b} - 3ₕ) des zweiten Linsenarrays (3).

7. Vorrichtung nach einem der Ansprüche 1 bis 6, wobei die Vorrichtung mindestens eine als Fourierlinse dienende Linse (5_{b}) umfasst, die in Ausbreitungsrichtung des aufzuteilenden Lichtstrahls (1) hinter einem der Umlenkelemente angeordnet ist, wobei durch diese Linse (5_{b}) ein von dem Umlenkelement abgelenkter Teilstrahl (1ᵢ) hindurch treten und hinsichtlich seiner Strahlparameter beeinflusst werden kann.

8. Vorrichtung nach einem der Ansprüche 1 bis 7, wobei die Vorrichtung Homogenisierungsmittel (2) umfasst, die in Ausbreitungsrichtung (Z) des aufzuteilenden Lichtstrahls (1) vor dem ersten Linsenarray (3) angeordnet sind.

## Claims

1. Apparatus for splitting a light beam (1), comprising
- a first lens array (3) with a plurality of lenses (3ₐ-3ᵢ) arranged next to one another in a first direction (X), of which at least two have a mutually differing, positive focal length, wherein the first lens array (3) has a plane, which is defined by the first direction (X) and a direction (Y) which is perpendicular to the first direction (X), and in which the connecting lines of the lenses (3ₐ-3ᵢ) lie, wherein the light beam (1) that is to be split can pass through the first lens array (3) and form at least some mutually separated, at least partially convergent subbeams (1ₐ-1ᵢ) after passing through the plurality of lenses (3ₐ-3ᵢ), and
- deflecting means (4) with a plurality of deflecting elements that are arranged downstream of the first lens array (3) and can deflect at least some of the subbeams (1ₐ-1ᵢ),
- **characterized in that** a first deflecting element of a first lens (3ₐ) with a first focal length is assigned in such a way that it can deflect a subbeam which has passed through the first lens (3ₐ), and **in that** a second deflecting element of a second lens (3ᵢ) with a second focal length is assigned in such a way that it can deflect a subbeam which has passed through the second lens (3ᵢ), the first deflecting element being at a smaller distance (dₐ) than the second deflecting element in a third direction (Z) perpendicular to the first and to the second directions (X, Y) in relation to the plane in which the connecting lines (3ₐ-3ᵢ) of the first lens array (3) lie, and the second focal length being greater than the first focal length.

2. Apparatus according to Claim 1, in which the deflecting elements are mirrors (4ₐ-4ᵢ).

3. Apparatus according to one of Claims 1 and 2, in which the lenses (3ₐ-3ᵢ) are cylindrical lenses.

4. Apparatus according to Claim 1, wherein the apparatus comprises two lens arrays (3), wherein the first as well as the second lens array (3) respectively have a plurality of cylindrical lenses, and wherein the cylinder axes of the cylindrical lenses on the first lens array (3) are aligned perpendicular to those on the second lens array (3).

5. Apparatus according to one of Claims 1 to 4, wherein the apertures of at least some of the lenses (3ₐ-3i) of the first and/or second lens arrays (3) are equal.

6. Apparatus according to one of Claims 4 and 5, wherein the two outer lenses (3ₐ, 3ᵢ) of the first lens array (3) have a larger aperture than at least some other ones of the lenses (3_{b}-3ₕ) of the first lens array (3) or that the two outer lenses (3ₐ-3ᵢ) of the second lens array (3) have a larger aperture than at least some other ones of the lenses (3_{b}-3ₙ) of the second lens array (3).

7. Apparatus according to one of Claims 1 to 6, wherein the apparatus comprises at least one lens (5_{b}) that serves as a Fourier lens and is arranged downstream of one of the deflecting elements in the propagation direction of the light beam (1) to be split, wherein the subbeam (1ᵢ) deflected by the deflecting element can pass through this lens (5_{b}) and be influenced with regard to its beam parameters.

8. Apparatus according to one of Claims 1 to 7, wherein the apparatus comprises homogenization means (2) that are arranged upstream of the first lens array (3) in the propagation direction (Z) of the light beam (1) to be split.

## Revendications

1. Dispositif pour diviser un faisceau lumineux (1), comportant
- une première mosaïque de lentilles (3) avec une multiplicité de lentilles (3ₐ - 3ᵢ) disposées côte à côte dans une première direction (X), parmi lesquelles au moins deux présentent une distance focale positive différente l'une de l'autre, la première mosaïque de lentilles (3) présentant un plan défini par la première direction (X) et par une direction (Y) perpendiculaire à la première direction (X) et dans lequel sont situées les lignes de liaison des lentilles (3ₐ - 3ᵢ), le faisceau lumineux (1) à diviser pouvant traverser la première mosaïque de lentilles (3) et pouvant former après la traversée de la multiplicité de lentilles (3ₐ - 3ᵢ), au moins quelques rayons partiels (1ₐ - 1ᵢ) au moins partiellement convergents séparés les uns des autres ; ainsi que
des moyens de déviation (4) avec une multiplicité d'éléments de déviation, disposés derrière la première mosaïque de lentilles (3) et pouvant dévier au moins certains des rayons partiels (1ₐ - 1ᵢ),
**caractérisé en ce qu'**un premier élément de déviation est affectée à une première lentille (3ₐ) avec une première distance focale de manière à pouvoir dévier un rayon partiel ayant traversé la première lentille (3ₐ), et **en ce qu'**un deuxième élément de déviation est affectée à une deuxième lentille (3ᵢ) avec une deuxième distance focale de manière à pouvoir dévier un rayon partiel ayant traversé la deuxième lentille (3ᵢ), le premier élément de déviation, situé dans une troisième direction (Z) perpendiculaire au plan des première et deuxième directions (X, Y) dans lequel se trouvent les lignes de liaison des lentilles (3ₐ - 3ᵢ) de la première mosaïque de lentilles (3), présentant une distance (dₐ) inférieure à celle du deuxième élément de déviation, et la deuxième distance focale étant supérieure à la première distance focale.

2. Dispositif selon la revendication 1, dans lequel les éléments de déviation sont des miroirs (4ₐ - 4ᵢ).

3. Dispositif selon une des revendications 1 ou 2, dans lequel les lentilles (3ₐ - 3ᵢ) sont des lentilles cylindriques.

4. Dispositif selon la revendication 1, dans lequel le dispositif comporte une deuxième mosaïque de lentilles (3), dans lequel la première tout comme la deuxième mosaïque de lentilles (3) comportent respectivement une multiplicité de lentilles cylindriques, et dans lequel les axes des cylindres des lentilles cylindriques de la première mosaïque de lentilles (3) sont orientés perpendiculairement à ceux de la deuxième mosaïque de lentilles (3).

5. Dispositif selon une des revendications 1 à 4, dans lequel les ouvertures d'au moins quelques unes des lentilles (3ₐ - 3ᵢ) de la première et/ou de la deuxième mosaïque de lentilles (3) sont identiques.

6. Dispositif selon une des revendications 4 à 5, dans lequel les deux lentilles externes (3ₐ, 3ᵢ) de la première mosaïque de lentilles (3) présentent une ouverture plus grande qu'au moins certaines des autres lentilles (3_{b} - 3ₕ) de la première mosaïque de lentilles (3) ou dans lequel les deux lentilles externes (3ₐ, 3ᵢ) de la deuxième mosaïque de lentilles (3) présentent une ouverture plus grande qu'au moins certaines des autres lentilles (3_{b} - 3ₕ) de la deuxième mosaïque de lentilles (3).

7. Dispositif selon une des revendications 1 à 6, dans lequel le dispositif comporte au moins une lentille (5_{b}) servant de lentille de Fourier qui est disposée derrière un des éléments de déviation dans la direction de propagation du faisceau lumineux (1) à diviser, dans lequel un rayon partiel (1ᵢ) dévié par l'élément de déviation peut traverser cette lentille (5_{b}) et peut être influencé en rapport avec ses paramètres de rayonnement.

8. Dispositif selon une des revendications 1 à 7, dans lequel le dispositif comporte des moyens d'homogénéisation (2) disposés devant la première mosaïque de lentilles (3) dans la direction de propagation (Z) du faisceau lumineux (1) à diviser.
